Europäisches Patentamt

European Patent Office

Office européen des brevets

(11) Publication number: **0 063 938**
**B1**

(12) **EUROPEAN PATENT SPECIFICATION**

(45) Date of publication of patent specification: **11.09.85**

(21) Application number: **82302113.4**

(22) Date of filing: **26.04.82**

(51) Int. Cl.⁴: **B 41 J 1/26,** B 41 J 25/20, G 06 F 15/20

(54) **Typing device.**

(30) Priority: **29.04.81 ITU 5318381**

(43) Date of publication of application:
**03.11.82 Bulletin 82/44**

(45) Publication of the grant of the patent:
**11.09.85 Bulletin 85/37**

(84) Designated Contracting States:
**CH DE FR GB LI SE**

(56) References cited:
**EP-A-0 052 725**
**US-A-3 199 446**

**IBM Technical Disclosure Bulletin, vol.9. no.11,
April 1967, New York (US), R.S. Heard et al.:
"Text composition with numerous accents",
page 1578**

**IBM Technical Disclosure Bulletin, vol.22,
no.8B, January 1980, New York (US), A.W.
Maholick et al.: "Multiple overstrike printing
method", pp.3786-3788**

(73) Proprietor: **Ing. C. Olivetti & C., S.p.a.
Via G. Jervis 77
I-10015 Ivrea (IT)**

(72) Inventor: **Rolfo, Arturo
Via Rino Rolfo 5
I-15020 Murisengo (AL) (IT)**

(74) Representative: **Pears, David Ashley, et al
REDDIE & GROSE 16 Theobalds Road
London WC1X 8PL (GB)**

Courier Press, Leamington Spa, England.

## Description

The present invention relates to a typing device having a plurality of characters which can be used for the typing of texts in accordance with one or more scripts.

A typing device is known comprising a character-bearing disc having a certain number of symbols and graphical signs allowing typing to be carried out in a specific language or group of languages. Since each group of languages has its own specific series of characters and symbols, the number and the type of languages which can be typed using one particular disc is limited to the number of differing characters which can be carried on the laminae of the disc. For reasons of bulk, this number is in practice substantially less than the number of characters included in the principal scripts derived from one single alphabetical stem, such as for example the Latin alphabet. Where it is necessary to be able to type various groups of languages, it is consequently necessary to provide more character-bearing discs. This circumstance consequently makes it difficult to resolve the problem of transcribing texts received through the TELETEX system, the characters of which, amounting to several hundred, are appreciably greater in number than the number of characters, which in the most elaborate versions amount to one hundred, provided on known character-bearing members.

The object of the present invention is to provide an appreciably reduced group of characters which is adapted to allow typing of all the various scripts derived from one single alphabetical stem, and in particular that which is required for the International Teletex Service.

The typing device in accordance with the present invention is defined in claim 1 below.

Although this specification makes various use of the expressions character, symbol, sign, for simplicity in defining the invention in the claims, the term "symbol" is used generically to encompass all alphanumeric characters, punctuations and diacritical marks, graphical signs and other signs or symbols.

The present invention will be described in more detail, by way of example, with reference to the accompanying drawings, in which:

Fig. 1 is a partial view of a typing device embodying the invention;

Fig. 2 is a partial diagrammatical view of a machine employing the device in Fig. 1;

Fig. 3 shows a group of characters of the device in Fig. 1;

Fig. 4 shows a group of characters of the device in Fig. 1;

Fig. 5 shows a second group of characters of the device; and

Fig. 6 shows some examples of characters typed using the device.

Typing intervals are given herein in fractions of an inch since standard letter spacings are 1/10" 1/12" and modern typewriters base carriage movements on multiples of 1/60". These dimensions correspond to 2.54 mm, 2.12 mm and 0.423 mm respectively.

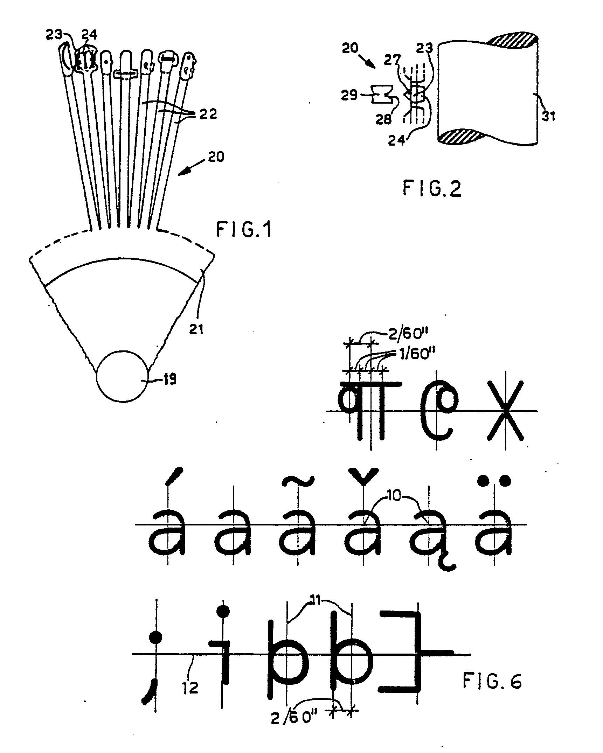

The typing device shown in Fig. 1 comprises a character-bearing disc 20 in a high strength plastics material, having a central portion 21 adapted to be fixed in a known manner to a selector shaft 19, and a peripheral rim bearing incisions in the radial sense so as to define a series of flexible laminae 22, which are equidistantly spaced from each other. The laminae 22 terminate in a substantially enlarged portions 23 which bear embossed characters.

The character-bearing disc 20 is substantially similar to that described in Italian patent No. 1,016,590, issued on 20th June 1977 in the name of the present applicant, and consequently will not be described here in greater detail. The character-bearing disc or daisy wheel 20 comprises one hundred flexible laminae 22 which terminate in one hundred bases 23 or positions from each one of which projects a character, a symbol or a graphical sign, these being indicated by 24. From the face opposite the base 23 (Fig. 2), a positioning wedge 27 projects and this engages with a V-shaped notch 28 of a hammer 29 for striking the selected characters 24 against the platen 31 in front of it, at an exactly defined point of printing. The machine is designed to be able to displace the assembly comprising disc 20 and hammer 29 parallel to the platen 30 in order to define the fresh points of printing along one line.

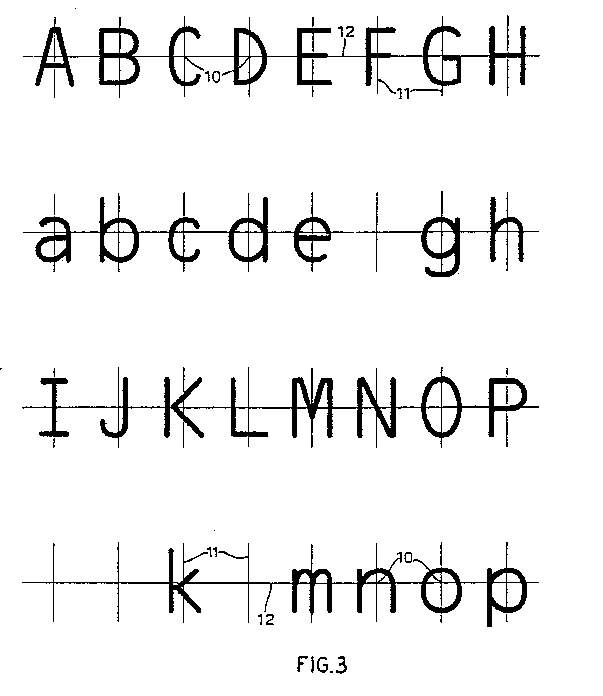

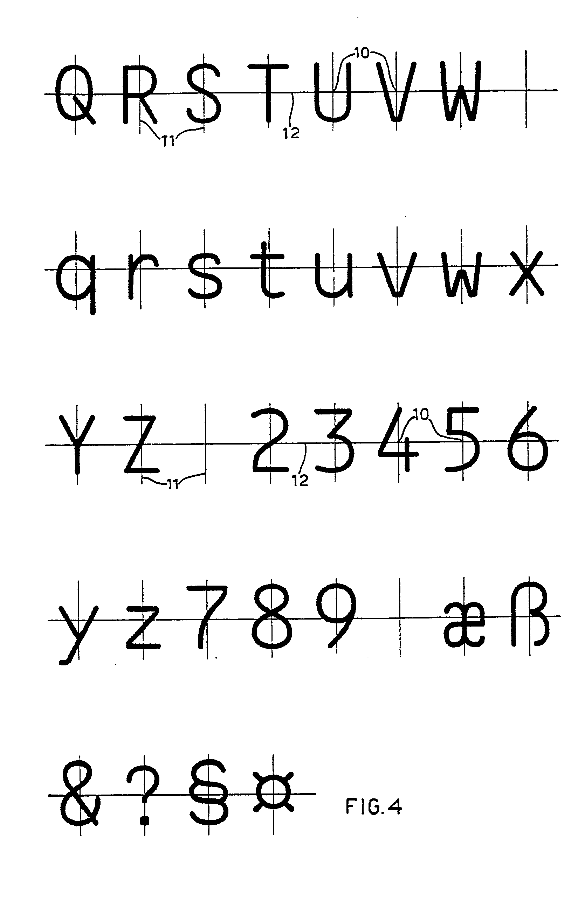

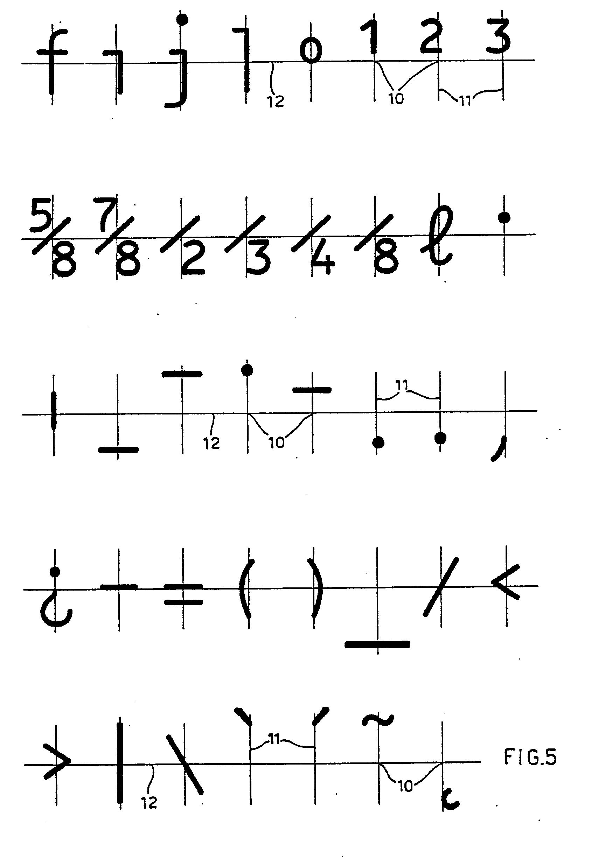

The shape of the characters 24 (Figs. 3 and 4) is of the "sans serif" type, substantially similar to the shape of the OCR—B series of characters of the ECMA—11 standard, printed in October 1971. These characters are additionally adaptable to be typed at intervals of 1/10" and 1/12". The central point of typing is generally indicated by 10 in figures 3, 4 and 5 and is defined by a vertical axis 11 and a horizontal axis 12. The axes of the printing face of some of the characters on the daisy wheel which are shown in figures 3 and 4 have shapes and locations which are completely identical to those of the corresponding OCR—B characters. Other characters and symbols, shown in figure 5, have special shapes and locations, which are different from those of OCR—B characters. The distribution of the characters, symbols and graphical signs present on the bases of the daisy wheel is shown in table 1, where, to each position 1, 2, 3 ... 99 and 100 there corresponds one character, one symbol or one graphical sign from figures 3, 4 and 5.

In accordance with the invention, the arrangement and the shape of the characters, signs and symbols on the typing device is such as to allow all the characters and the graphical combinations derived from one common alphabetical stem to be represented. This is obtained either using individual strikes of the characters carried on the daisy wheel or by using a suitable combination of successive strikes of such characters, signs and symbols at the position of printing, which, depending on the individual case, are in alignment with the axis of typing 11 in figures 3, 4 and 5 or are forwards or backwards with respect to the axis of typing 11 by a predetermined multiple of 1/60". The example which follows describes the method of transcribing decimal numbers, symbols representing commonly used foreign currencies, punctuation marks, arithmetical signs, fractions, heterogeneous symbols, graphical signs, etc. as required by the International Teletex Service in accordance with the draft recommendations ISO/TC 97/SC 2/WG4 No. 198 of 29.2.1980. Tables 2, 3, 4 and 5 show, in column 1, the ISO code for the character, number, sign, etc. whilst the character, number, sign, etc. which is to be struck is shown in column two. In particular, the ISO codes which start with L indicate the 52 basic upper-case and lower-case characters of the Latin alphabet as well as Latin characters carrying diacritic accents and signs as well as other alphabetical characters which are not direct Latin characters, with any diacritic signs. The ISO codes which start with ND concern decimal numbers, the SC codes relate to currency symbols, the SP codes are punctuation marks, SA are arithmetical signs, NS are exponents, NF are fractions, SM are heterogeneous symbols and SD concern the diacritic signs. Table 5 additionally lists other symbols which are not coded in the ISO recommendations given above.

In column three of tables 2, 3, 4 and 5, an indication is given of the locations of the characters and graphical signs on the bases of the character-bearing disc, which can be typed directly.

It will be readily seen that almost all the one hundred characters carried on the daisy wheel have a significance even when printed by themselves. The following should be mentioned as being exceptions: the symbol at location 4 which is used for the symbol for pound sterling (£) and for the Lapp eng (η) LN61; the number one as a fraction numerator, location 60; the fractional denominators "/2", "/3", and "/8", locations 61, 63 and 65; the short vertical stroke " ı ", location 82, which is used for the asterisk (*) and the exclamation mark (!); the upper cross-stroke "‾" for "ħ" LH61 and "đ" LD61. The underlining sign, location 97, can be used for underlining characters and for the brackets.

When the character or symbol needs more strikes, columns 4, 5, 6 and 7 indicate the location on the daisy wheel of the graphical sign which is to be struck, and, if the sign is struck at a position corresponding to the axis of typing 11 (Figs. 3, 4 and 5), this is not followed by any further indication, whilst if the constituent sign is to be struck at a position which is displaced with respect to the axis 11, it is followed by an indication both of the direction and of the extent of displacement of the point of printing, and this is done in the progressive order shown in columns 4, 5, 6 and 7.

The fifty-two letters of the alphabet (upper and lower case) are carried on the bases of the character-bearing disc and the location of these can be seen in table 1. These fifty-two letters are typed each using one single strike with the exception of the "i" (lower case) and of the "X" (capital) as will be described below.

In order to clarify what has been said above, let it be supposed that it is necessary to strike for example, the "a" (lower case). The first column of table 2 indicates the symbol LA01 from the ISO draft recommendations referred to above, whilst the second column indicates the graphical sign, which in the case of this example is the "a". The third column indicates that the character-bearing disc will be rotated so as to align the character at location 9, corresponding to the a (table 1), with the hammer 29, whilst the fourth column (table 2) indicates that the character will be printed using one single strike, as shown in figure 6, this being done so as to correspond with the axis of printing 11 in the absence of other indications in the fourth column.

Let us suppose that it is necessary, to print, for example the "a" with an acute accent. The first column of table 2 gives the ISO symbol LA11, the second column gives the "a", the third column does not have an entry since the "á" to be struck is made up by two graphical signs, these being the "a" and the acute accent "´". The fourth column indicates the number of the location, in this example 9, which from table 1 will be seen to correspond to the "a", and in the fifth column (table 2), the location 8 is given, and this is struck during the second striking operation, and corresponds to the acute accent "´", as given in table 1; no indication as regards displacement is given since the axis of printing 11 coincides for the striking of position 9 and the succeeding striking of position 8. Using the combination of these two strikes, the "á" is printed as represented in figure 6.

Let us now suppose that it is necessary to type the "ằ" (lower case with the shortening symbol over it). The first column of table 2 gives LA23 as the ISO symbol and the second column gives the "a", whilst the third column has no entry since we are dealing with a composite symbol. From the fourth column, it is found that the first strike concerns the location 9, corresponding to the "a" in table 1, and this is performed in alignment with the printing axis 11 of the final character. From the fifth column, it is found that the second strike concerns location 8, which corresponds to the acute accent "´" in table 1, and this is carried out at a position corresponding to the axis 11. From the sixth column it is found that a third strike is involved and this concerns location 64, which corresponds to the grave accent "`" in table 1. This strike is also carried out at a position corresponding to the axis of printing 11, and the symbol "´" becomes joined to the symbol "`" thus providing the shortening symbol "ˇ" which is located over the "a", as indicated in figure 6.

In order to print the i (lower case), coded LI01 in table 2, there is no entry in the third column since, as has been stated above, the "i" is a composite character. From the fourth column it is found that the first strike concerns the location 5, corresponding to the "i" without its dot in table 1, and this is carried out in alignment with the printing axis 11. From the fifth column of table 2 it is found that the second strike concerns location 16, corresponding to the "·" of table 1, and this is also typed in alignment with the printing axis 11. Using the combination of these two strikes, the lower-case "i" is consequently printed out as indicated in figure 6.

Let us now suppose that it is necesary to type the symbol " ⁋ ", the American paragraph symbol, SM25 in table 5. The third column does not include an entry since this is a composite character, and the fourth column indicates the first strike to be carried out at location 85, corresponding to the symbol for degrees "°" in table 1, together with the indication that this is carried out using a displacement of −2/60″ with respect to the printing axis 11, in other words the symbol "°" is struck so as to be displaced backwards with respect to the printing axis by 2/60″. The fifth column of table 5 indicates the second strike at location 84, which corresponds to the "T" of table 1, with an indication that this is carried out using a displacement of +1/60″. Since the first strike was displaced by −2/60″ and the second strike is displaced by +1/60″ with respect to the first strike, the "T" is typed displaced backwards by 1/60″ with respect to the printing axis 11. The sixth column in table 5 indicates that the third strike at location 84, which is identical to the preceding one, with an indication that this is carried out using a displacement of +2/60″ with respect to the second strike and consequently the third strike is displaced by 1/60″ with respect to the printing axis 11. Using the combination of these three strikes, the symbol "⁋" is typed as shown in figure 6.

Let us suppose that it is necessary to type the "@" (the "a" used in commerce). The third column of table 5 does not have an entry since this is a composite character, the fourth column indicates the first strike at location 32, corresponding to the sign "C" in table 1, without any additional indications so that, consquently, printing is carried out in alignment with the printing axis 11 (figures 3 and 5). The fifth column of table 5 indicates the second strike at location 85, corresponding to the "°" (degree symbol) in table 1, together with the indication that the strike is carried out displaced by +1/60″ with respect to the first strike. After the two strikes, the resulting character will have a practically continuous outline which defines the "@" in figure 6.

Let us now suppose that it is necesssary to type the lower-case Icelandic symbol "þ", LT63. The third column of table 4 does not have an entry since this is a composite character and the fourth column indicates the first strike at location 7, corresponding to the lower-case "b" in table 1, and the fifth column of table 4 indicates the second strike at location 27, corresponding to the lower-case "p" in table 1. As there are no other indications, the two letters "b" and "p" are typed in alignment with the printing axis 11, so that using these two strikes, the small Icelandic "þ" is

typed with the continuous profile shown in figure 6.

For typing the Icelandic capital "Þ", on the other hand, the third column of table 4 does not include an entry since this is a composite character, and from the fourth column it will be seen that the first strike at location 58, corresponding to the sign "|" (elongated vertical line) of table 1, is carried out displaced by −2/60″ with respect to the printing axis 11 so that the sign "|" is typed displaced backwards by 2/60″ with rspect to the printing axis 11. From the fifth column it will be seen that the second strike at location 18, corresponding to the letter "o" (lower-case) in table 11, is carried out displaced by +2/60″ with respect to the first strike and the composite character will be typed in alignment with the print axis 11, as shown in figure 6.

Let us suppose that it is necessary, for example, to type the (capital) X, in table 4, LX02. There is no entry in the third column, this sign being of the composite type. The fourth column gives the first strike at location 48, corresponding to the sign "\" (oblique stroke inclined to the left) in table 1, and the fifth column gives the second strike at location 19, corresponding to the sign "/" (oblique stroke inclined to the right) in table 1. In this example the two strikes are carried out in alignment with the print axis 11 thus yielding the X (capital) which will itself be centred on the axis 11, as shown in figure 6.

When it is necessary to type a punctuation mark, for example the semi-colon ";", SP14, in table 5, the absence of an entry in the third column indicates that this is a composite mark. The character-bearing disc is positioned at location 2, corresponding to the "," sign in table 1, aligned with the print axis 11. The second strike is carried out at location 55, this also being in alignment with the axis 11, in order to type the "·" sign, this being a mid-position full stop sign in table 1, which is located over the comma.

Let us suppose that it is necessary to type a heterogeneous symbol "]" (righthand bracket brace). From table 5 it will be seen that the third column does not include an entry as we are dealing with a composite symbol. From the fourth column it will be found that the first printing operation, carried out at location 97, corresponds to the sign "—" in table 1, and this is performed displaced by −2/60″ with respect to the print axis 11, that is, the sign "—" is displaced backwards by 2/60″ with respect to the print axis. From the fifth column it is found that the second print operation at location 95, corresponds to the sign "—" in table 1, and this is carried out at the same position as the first printing operation, in other words it is also displaced backwards by 2/60″. From the sixth column it is found that the third printing operation, at location 58, corresponds to the "|" sign in table 1, and this is carried out displaced by +2/60″ with respect to the first and second printing operations, so that it is now on the print axis 11 of the final character. From the seventh column it is found that the fourth print operation, at location 3, corresponds to the sign "—" this being the mid-position horizontal stroke in table 1, and this is printed displaced by +1/60" with respect to the third print operation and is consequently displaced by 1/60" forwards with respect to the print axis 11, as shown in figure 6. From tables 2, 3, 4 and 5 it will be seen that the sign "·", an upper dot, is used for the vowels and consonants which are dotted, as a sign of diaeresis and with punctuation marks, for example for forming the "¡", the inverted exclamation mark. The comma sign "," is used in combination with consonants which have a cedilla, for the symbol for the florin, for the semicolon, for the Greek "μ" and for the Lapp "eng", both in the upper and lower case. The acute accent " ´ " and the grave accent " ` " are used for forming the shortening sign " ˇ ", the circumflex accent " ˆ " and the double inverted commas. Additionally, the mid-position horizontal stroke is used for the characters "d" and "h" carrying a horizontal bar, "đ" and "ħ", and for the Icelandic "eth", and finally the sign "=" is also used, together with the "H", for defining the Maltese "Ħ".

The examples described above are intended only to facilitate the reading of tables 2, 3, 4 and 5, from which it is possible to find the necessary information for printing characters, symbols, signs, etc. and other graphical combinations as required by the ISO recommendation No. 198 for the International Teletex Service. It will however be clear that it is possible to print other built-up characters using combinations of print operations and displacements which differ from those given in the tables.

Modifications and improvements may be introduced into the printing device described above without departing from the scope of the invention. For example, the printing body, which in the description is a character-bearing disc provided with flexible laminae commonly referred to as a "daisy wheel", may be a spherical printing head or a barrel printing head or any other type of printing body which is normally mounted on a typewriter. Alternatively, the characters listed may be carried on corresponding type bars of typewriters of this kind. Everything that has been described above concerning the striking operations of the single hammer and the displacement of the carriage should in this case be taken to mean striking operations of the type bar and displacement of the carriage.

The dimensions of the typing face can be chosen to lie within fairly wide margins. Nevertheless, excellent results when forming the connections between the various graphical representations typed have been obtained using a typing face of size 0.22mm.

The location and distribution of the characters, signs and symbols as given in table 1 can be varied in accordance with various criteria which a person skilled in the art will easily be able to apply to a character-bearing disc employing flexible laminae, to a spherical print head, to a barrel-shaped character-bearing body and to any other type of printing body. By varying the distribution and positioning of the characters, symbols and signs in table 1, a change results in the locations and printing positions given in tables 2, 3, 4 and 5. The positions which have been given in table 1 are those which allow the highest speed of printing when typing out texts in a wide range of languages.

## TAB.1

| Pos | Car. | Pos. | Car. | Pos. | Car. | Pos. | Car. |
|---|---|---|---|---|---|---|---|
| 1 | — | 26 | ·j | 51 | x | 76 | 8 |
| 2 | , | 27 | p | 52 | Y | 77 | 9 |
| 3 | - | 28 | z | 53 | $\ell$ | 78 | < |
| 4 | • | 29 | v | 54 | Q | 79 | > |
| 5 | c ; | 30 | s | 55 | • | 80 | ⊐⊏ |
| 6 | h.´ | 31 | c | 56 | 7/8 | 81 | K |
| 7 | b | 32 | C | 57 | q | 82 | ! |
| 8 | ✓ | 33 | A | 58 | \| | 83 | R |
| 9 | a | 34 | P | 59 | ₃ | 84 | T |
| 10 | s | 35 | B | 60 | 1 | 85 | • |
| 11 | r | 36 | y | 61 | /2 | 86 | ~ |
| 12 | t | 37 | β | 62 | /4 | 87 | · M |
| 13 | e | 38 | J | 63 | /3 | 88 | ? |
| 14 | g | 39 | U | 64 | ◥ | 89 | F |
| 15 | ı | 40 | ( | 65 | /8 | 90 | D |
| 16 | • | 41 | E | 66 | 4 | 91 | 2 |
| 17 | n | 42 | ¿ | 67 | 2 | 92 | — |
| 18 | o | 43 | H | 68 | 5 | 93 | L |
| 19 | d | 44 | O | 69 | =. | 94 | I |
| 20 | f | 45 | ⁒ | 70 | 6 | 95 | — |
| 21 | l | 46 | N | 71 | 5/8 | 96 | k |
| 22 | G | 47 | § | 72 | 7 | 97 | — |
| 23 | u | 48 | \ | 73 | & | 98 | ) |
| 24 | V | 49 | / | 74 | æ | 99 | w |
| 25 | m | 50 | W | 75 | 3 : | 100 | • |

TAB.2

| 1 | 2 | 3 | 4 | 5 | 6 | 7 |
|---|---|---|---|---|---|---|
| LA01 | a | 9 | 9 | | | |
| LA02 | A | 33 | 33 | | | |
| LA41 | à | | 9 | 8 | | |
| LA42 | A | | 33 | 8 | | |
| LA43 | â | | 9 | 64 | | |
| LA14 | A | | 33 | 64 | | |
| LA45 | ã | | 8·¹/₆₀ | 9·¹/₆₀ | 64·¹/₆₀ | |
| LA46 | Â | | 8·8·¹/₆₀ | 33·¹/₆₀ | 64·¹/₆₀ | |
| LA47 | ä | | 16·¹/₆₀ | 9·¹/₆₀ | 16·¹/₆₀ | |
| LA48 | Ä | | 16·¹/₆₀ | 33·¹/₆₀ | 16·¹/₆₀ | |
| LA4B | ã | | 9 | 86 | | |
| LA20 | A | | 33 | 86 | | |
| LA23 | å | | 9 | 8 | 64 | |
| LA24 | A | | 33 | 8 | 64 | |
| LA27 | a | | 9 | 16 | | |
| LA28 | A | | 33 | 16 | | |
| LA31 | æ | | 9 | 95 | | |
| LA32 | Æ | | 33 | 95 | | |
| LA43 | æ | | 9 | 31·¹/₆₀ | | |
| LA44 | Æ | | 33 | 31·¹/₆₀ | | |
| LA51 | æ | 74 | 74 | | | |
| LA52 | Æ | | 33·¹/₆₀ | 41·²/₆₀ | | |
| LB01 | b | 7 | 7 | | | |
| LB02 | B | 35 | 35 | | | |
| LC01 | c | 5 | 5 | | | |
| LC11 | c | 32 | 32 | | | A |

| 1 | 2 | 3 | 4 | 5 | 6 | 7 |
|---|---|---|---|---|---|---|
| LC12 | C | | 32 | 8 | | |
| LC15 | ĉ | | 8·¹/₆₀ | 5·¹/₆₀ | 64·¹/₆₀ | |
| LC16 | Ĉ | | 8·¹/₆₀ | 32·¹/₆₀ | 64·¹/₆₀ | |
| LC21 | c | | 5 | 8 | 64 | |
| LC22 | C | | 32 | 8 | 64 | |
| LC29 | c | | 5 | 64 | | |
| LC30 | C | | 32 | 64 | | |
| L?47 | ç | | 8·¹/₆₀ | 2 | | |
| LC42 | Ç | | 5 | 2 | | |
| LD01 | d | | 32 | 32 | | |
| LD0E | D | | 19 | | 49 | 64 |
| LD21 | ð | | 90 | 8 | 96 | 64 |
| LD22 | Ð | | 49 | 8 | | |
| LD61 | đ | | 90 | 92·¹/₆₀ | | |
| LD62 | Đ | | 49 | 90·¹/₆₀ | | 92 |
| LD63 | ð | | 3·¹/₆₀ | 98·¹/₆₀ | | |
| LE01 | e | | 48 | 8 | 64 | 13 |
| LE02 | E | | 43 | 8 | 64 | 44 |
| LE11 | ê | | 41 | 64 | | |
| LE12 | Ê | | 43 | 64 | | |
| LE15 | ê | | 41 | 18·¹/₆₀ | 64·¹/₆₀ | |
| LE14 | Ê | | 43 | 41·¹/₆₀ | 64·¹/₆₀ | |
| LE15 | ë | | 41 | 13·¹/₆₀ | 16·¹/₆₀ | |
| LE16 | Ë | | 43 | 41·¹/₆₀ | 16·¹/₆₀ | |
| LE17 | ë | | 16·¹/₆₀ | | | |
| LE18 | Ë | | 16·¹/₆₀ | 8 | 64 | |
| L25? | e | | 13 | | | |

| 1 | 2 | 3 | 4 | 5 | 6 | 7 |
|---|---|---|---|---|---|---|
| LA2E | E | | 41 | 8 | 64 | |
| LE29 | è | | 43 | 16 | | |
| LE30 | È | | 41 | 16 | | |
| LE31 | ê | | 43 | 95 | | |
| LE32 | Ê | | 41 | 95 | | |
| LG43 | e | | 43 | 31 | | |
| LE44 | E | | 41 | 31·¹/₆₀ | | |
| LF01 | f | 20 | 20 | | | |
| LF02 | F | 89 | 89 | | | |
| LG01 | g | 14 | 14 | | | |
| LG02 | G | 22 | 22 | | | |
| LG11 | g | | 14 | 8 | 64 | |
| LG15 | g | | 8·¹/₆₀ | 14·¹/₆₀ | 64·¹/₆₀ | |
| LA46 | G | | 8·¹/₆₀ | 22·¹/₆₀ | 64·¹/₆₀ | |
| LG23 | g | | 14 | 8 | 64 | |
| LG24 | G | | 22 | 8 | 64 | |
| LG29 | g | | 14 | 16 | | |
| LG30 | Ġ | | 22 | 16 | | |
| LG42 | Ģ | | 22 | 2 | | |
| LH01 | h | 6 | 6 | | | |
| LH02 | H | 43 | 43 | | | |
| LH15 | ĥ | | 8·¹/₆₀ | 6·¹/₆₀ | 64·¹/₆₀ | |
| LH16 | Ĥ | | 8·¹/₆₀ | 43·¹/₆₀ | 64·¹/₆₀ | |
| LH61 | ħ | | 32·¹/₆₀ | 6·¹/₆₀ | 16·¹/₆₀ | |
| LH62 | Ħ | | 43 | 63 | 16 | |
| LI01 | i | | 45 | 16 | | |
| LI02 | I | 94 | 94 | | | |

TAB.3

| 1 | 2 | 3 | 4 | 5 | 6 | 7 |
|---|---|---|---|---|---|---|
| LH1 | ı̌ | | 15 | 8 | | |
| LH2 | ı̆ | | 94 | 8 | | |
| LH3 | ı̃ | | 15 | 64 | | |
| LH4 | ı̄ | | 94 | 64 | | |
| LH5 | ı̌ | | 8·¹/₆₀· | 15·¹/₆₀· | 64·¹/₆₀· | |
| LH6 | ı̄ | | 8·¹/₆₀· | 94·¹/₆₀· | 64·¹/₆₀· | |
| LH7 | ı̈ | | 16·¹/₆₀· | 15·¹¹/₆₀· | 16·¹/₆₀· | |
| LH8 | ı̈ | | 16·¹/₆₀· | 94·¹/₆₀· | 16·¹/₆₀· | |
| LI9 | ı̃ | | 15 | 86 | | |
| LI20 | ı̃ | | 94 | 86 | | |
| LI90 | ı | | 94 | 16 | | |
| LI31 | ı̄ | 15 | 94 | 95 | | |
| LI32 | ı̄ | 26 | 15 | 16 | 31 | |
| LI43 | t | 30 | 94 | 31 | | |
| LI44 | t | | 15·¹/₆₀· | 16 | 26·³/₆₀· | |
| LI51 | ij | 96 | 94·¹/₆₀· | 30·²/₆₀· | | |
| LI52 | IJ | 81 | 15 | | | |
| LJ61 | ı | | 26 | | | |
| LJ01 | j | 96 | 30 | | | |
| LJ02 | J | 81 | 8·¹/₆₀· | 26·¹/₆₀· | 64·¹/₆₀· | |
| LJ15 | ĵ | | 8·¹/₆₀· | 30·¹/₆₀· | 64·²/₆₀· | |
| LJ16 | ĵ̃ | | 96 | | | |
| LK01 | k | | 81 | 2 | | |
| LK02 | K | | 96 | 2 | | |
| LK41 | ǩ | | 81 | | | |
| LK43 | K̃ | | 96 | | | |
| LK61 | ĸ | | | | | |

| 1 | 2 | 3 | 4 | 5 | 6 | 7 |
|---|---|---|---|---|---|---|
| LL01 | l | 24 | 24 | | | |
| LL02 | L̦ | 85 | 85 | | | |
| LL11 | ĺ | | 24 | 8 | | |
| LL12 | L̦ | | 85 | 8 | | |
| LL21 | l̃ | | 24 | 8 | 64 | |
| LL22 | L̦ | | 85 | 8 | 64 | |
| LL41 | l̂ | | 24 | 2 | | |
| LL42 | l̦ | | 85 | 2 | | |
| LL61 | ɫ | | 24 | 3 | | |
| LL62 | ɫ̇ | | 3·¹/₆₀· | 93·¹/₆₀· | | |
| LL63 | l̤ | 25 | 24·¹/₆₀· | 55·⁵/₆₀· | | |
| LL64 | l̤ | | 85 | 55·⁴/₆₀· | | |
| LM01 | m | 25 | 25 | | | |
| LM02 | M | 87 | 87 | | | |
| LN01 | n | 17 | 17 | | | |
| LN11 | N | 46 | 46 | | | |
| LN12 | ń | | 17 | 8 | 64 | |
| LN19 | Ń | | 46 | 8 | 64 | |
| LN20 | ñ | | 17 | 86 | | |
| LN21 | Ñ | | 46 | 86 | | |
| LN22 | n̂ | | 17 | 8 | | |
| LN41 | N̂ | | 46 | 8 | | |
| LN42 | n̦ | | 17 | 2 | | |
| LN61 | N̦ | | 46 | 2 | 2 | |
| LN62 | ŋ | | 17 | 4·¹/₆₀· | | |
| LN63 | ŋ̃ | | 84·²/₆₀· | 90·⁵/₆₀· | | |
| | | | 02·⁸/₆₀· | 17·⁹/₆₀· | | |

| 1 | 2 | 3 | 4 | 5 | 6 | 7 |
|---|---|---|---|---|---|---|
| LO01 | o | 18 | 18 | | | |
| LO02 | O | 44 | 44 | | | |
| LO11 | ó | | 18 | 8 | | |
| LO12 | Ó | | 44 | 8 | | |
| LO13 | ò | | 18 | 64 | | |
| LO14 | Ò | | 44 | 64 | | |
| LO15 | ô | | 8·¹/₆₀· | 18·¹/₆₀· | 64·¹/₆₀· | |
| LO16 | Ô | | 8·¹/₆₀· | 44·¹/₆₀· | 64·¹/₆₀· | |
| LO17 | ö | | 16·¹/₆₀· | 18·¹/₆₀· | 16·¹/₆₀· | |
| LO18 | Ö | | 16·¹/₆₀· | 44·¹/₆₀· | 16·¹/₆₀· | |
| LO19 | õ | | 18 | 86 | | |
| LO20 | Õ | | 44 | 86 | | |
| LO25 | o̧ | | 8·¹/₆₀· | 18·¹/₆₀· | 8·¹/₆₀· | |
| LO26 | O̧ | | 8·¹/₆₀· | 44·¹/₆₀· | 8·¹/₆₀· | |
| LO31 | o | | 18 | 95 | | |
| LO32 | O | | 44 | 95 | | |
| LO41 | œ | | 18·¹/₆₀· | 15·⁸/₆₀· | | |
| LO42 | Œ | | 44·⁸/₆₀· | 44·⁸/₆₀· | | |
| LO61 | ø | 27 | 18 | 49 | | |
| LO62 | Ø | 34 | 44 | 49 | | |
| LP01 | p | 27 | 27 | | | |
| LP02 | P | 34 | 34 | | | |
| LQ01 | q | 57 | 57 | | | |
| LQ02 | Q | 54 | 54 | | | |
| LR01 | r | 71 | 71 | | | |
| LR02 | R | 83 | 83 | | | |
| LR02 | r̃ | | 11 | 8 | | |

## TAB. 4

**Panel 1**

| 1 | 2 | 3 | 4 | 5 | 6 | 7 |
|---|---|---|---|---|---|---|
| LXO1 | x | 51 | 51 | | | |
| LXO2 | X | | 48 | 45 | | |
| LYO1 | y | 36 | 36 | | | |
| LYO2 | Y | 52 | 52 | | | |
| LY11 | ỳ | | 36 | 8 | | |
| LY12 | Ý | | 52 | 8 | | |
| LY15 | ŷ | | 8-1/60 | 36+1/60 | 64+1/60 | |
| LY16 | Ỳ | | 8-1/60 | 52+1/60 | 64+1/60 | |
| LY17 | y̆ | | 16+1/60 | 36+1/60 | 16+1/60 | |
| LY18 | ÿ | | 16+1/60 | 52+1/60 | 16+1/60 | |
| LZO1 | z | 28 | 28 | | | |
| LZO2 | Z | 45 | 45 | | | |
| LZ11 | ź | | 28 | 8 | | |
| LZ12 | Ż | | 45 | 8 | | |
| LZ31 | ž | | 28 | 8 | | |
| LZ32 | Ž | | 45 | 8 | | |
| LZ30 | ẑ | | 24 | 16 | 64 | |
| NDO1 | 1 | 67 | | 16 | 64 | |
| NDO2 | 2 | 75 | | | | |
| NDO3 | 3 | 66 | | | | |
| NDO4 | 4 | 68 | | | | |
| NDO5 | 5 | 70 | | | | |
| NDO6 | 6 | 72 | | | | |
| NDO7 | 7 | | | | | |
| NDO8 | 8 | 76 | | | | |
| NDO9 | 9 | 77 | | | | |

**Panel 2**

| 1 | 2 | 3 | 4 | 5 | 6 | 7 |
|---|---|---|---|---|---|---|
| LVO2 | U | 30 | 39 | | | |
| LV11 | ủ | | 23 | 8 | | |
| LV12 | Û | | 39 | 8 | | |
| LV13 | ŭ | | 23 | 64 | | |
| LV14 | Ŭ | | 39 | 64 | | |
| LV15 | ũ | | 8-1/60 | 23+1/60 | 64+1/60 | |
| LV16 | û | | 8-1/60 | 39+1/60 | 64+1/60 | |
| LV17 | ü | | 16+1/60 | 23+1/60 | 16+1/60 | |
| LV18 | ü | | 16+1/60 | 39+1/60 | 16+1/60 | |
| LV19 | ũ | | 23 | 86 | | |
| LV20 | Ũ | | 39 | 86 | | 64 |
| LV23 | ů | | 23 | 8 | | 64 |
| LV24 | Ů | | 39 | 8 | | |
| LV25 | ự | | 8-1/60 | 23+1/60 | 8+1/60 | |
| LV26 | Ự | | 8-1/60 | 39+1/60 | 8+1/60 | |
| LV27 | ʉ | | 23 | 16 | | |
| LV28 | Ʉ | | 39 | 16 | | |
| LV31 | ꞟ | | 23 | 85 | | |
| LV32 | ꞟ | | 39 | 95 | | |
| LV33 | ꞟ | | 23 | 94+1/60 | | |
| LV44 | ꞟ | 23 | 39 | 51 | | |
| LVO1 | v | 84 | 29 | | | |
| LVO2 | V | 99 | 24 | | | |
| LWO1 | w | | 99 | | | |
| LWO2 | W | 50 | 50 | | | |
| LW15 | ŵ | | 8-1/60 | 99+1/60 | 64+1/60 | |
| LW16 | Ŵ | | 8-1/60 | 50+1/60 | 64+1/60 | |

**Panel 3**

| 1 | 2 | 3 | 4 | 5 | 6 | 7 |
|---|---|---|---|---|---|---|
| LR12 | R | | 85 | 8 | | |
| LR21 | r | | 11 | 8 | 64 | |
| LR22 | R | | 83 | 8 | 64 | |
| LR41 | r | | 11 | 2 | | |
| LR42 | R | 10 | 85 | 2 | | |
| LSO1 | s | 30 | 10 | | | |
| LSO2 | S | | 30 | | | |
| LS11 | ś | | 10 | 8 | 64+1/60 | |
| LS12 | Ś | | 30 | 8 | 64+1/60 | |
| LS15 | ŝ | | 8-1/60 | 10+1/60 | | |
| LS16 | Ŝ | | 8-1/60 | 30+1/60 | | |
| LS21 | š | | 10 | 8 | 64 | |
| LS22 | Š | | 30 | 8 | 64 | |
| LS41 | ş | | 10 | 2 | | |
| LS42 | Ş | 37 | 30 | 2 | | |
| LS61 | ß | 42 | 37 | | | 64 |
| LTO1 | t | 84 | 42 | | | 64 |
| LTO2 | T | | 84 | 8 | | |
| LT21 | ť | | 42 | 8 | | |
| LT22 | Ť | | 84 | 2 | | |
| LT41 | ţ | | 42 | 2 | | |
| LT42 | Ţ | | 84 | 3 | | |
| LT61 | ŧ | | 42 | 3 | | |
| LT62 | Ŧ | | 84 | 27 | | |
| LT63 | þ | | 7 | 48+1/60 | | |
| LT64 | þ | 89 | 53-1/60 | | | |
| LUO1 | u | | 23 | | | |

## TAB.5

| 1 | 2 | 3 | 4 | 5 | 6 | 7 |
|---|---|---|---|---|---|---|
| ND0 | O | | 44 | | | |
| SX01 | ¤ | 80 | 80 | 97+1/60 | 4+1/60 | |
| SX02 | ∫ | | 20-1/60 | 58 | | |
| SX03 | 5 | | 30 | 49 | | |
| SX04 | ✓ | | 5 | 69 | | |
| SX05 | ✗ | | 52 | 100 | | |
| SP02 | ! | | 82 | 16 | | |
| SP03 | — | | 82 | 82+2/60 | | |
| SP04 | = | | 82-1/60 | | | |
| SP05 | — | | 82 | | | |
| SP06 | ( | 40 | 40 | | | |
| SP07 | ) | 58 | 98 | | | |
| SP08 | , | 2 | 2 | | | |
| SP09 | [ | 1 | 1 | | | |
| SP10 | ] | 3 | 3 | | | |
| SP11 | — | 100 | 100 | | | |
| SP12 | . | 49 | 49 | | | |
| SP13 | / | | 100 | 55 | | |
| SP14 | : | | 2 | 55 | | |
| SP15 | ; | 88 | 88 | | | |
| SP16 | ~ | 42 | 42 | | | |
| SP17 | « | | 75-1/60 | 78+2/60 | | |
| SP18 | » | | 75-2/60 | 75-2/60 | | |
| SA01 | + | | 3 | 82 | | |
| SA02 | +1 | | 3 | 82 | 97 | |
| SA03 | ∨ | | 78 | | | |
| SA04 | ∩ | | 69 | | | |

| 1 | 2 | 3 | 4 | 5 | 6 | 7 |
|---|---|---|---|---|---|---|
| SA05 | ∧ | 79 | 79 | | | |
| SA06 | ÷ | | 55 | 100 | 3 | |
| SA07 | × | | 51 | | | |
| NJO2 | : | 91 | 91 | | | |
| NFO1 | ∴ | 59 | 59 | | | |
| NFO4 | 1/2 | | 60-1/60 | 61+1/60 | | |
| NFO4 | 1/3 | | 60-1/60 | 62+1/60 | | |
| NFO5 | 3/4 | | 59-1/60 | 64+1/60 | | |
| SH01 | # | | 58-1/60 | 69-1/60 | 58+1/60 | |
| SN02 | % | | 65-1/60 | 69-1/60 | 100+1/60 | |
| SH03 | & | 73 | 73 | | | |
| SH04 | * | | 79-1/60 | 82+1/60 | 79+1/60 | |
| SN05 | @ | | 32 | 85+1/60 | | |
| SH06 | [ | | 58-1/60 | 97+8/60 | 95 | |
| SH08 | ] | | 97-7/60 | 95 | 58+2/60 | |
| 6H13 | — | 58 | 58 | | | |
| SH17 | μ | | 2-1/60 | 23-1/60 | 70+1/60 | |
| 6H18 | Ω | | 100-1/60 | 44+1/60 | 100+1/60 | |
| SH19 | ° | 85 | 85 | | | |
| SN20 | Q | | 48 | | | |
| SN24 | ā | | 9 | 97 | | |
| SH24 | ς | | 47 | 97 | | |
| SN25 | ¶ | 47 | 85-2/60 | 84+1/60 | 84+5/60 | |
| 6H26 | · | 55 | 55 | | | |
| SD11 | ` | 8 | 8 | | | |
| SD13 | ´ | 64 | 64 | | | |
| SD15 | ∠ | | 8-1/60 | 61+8/60 | | |

| 1 | 2 | 3 | 4 | 5 | 6 | 7 |
|---|---|---|---|---|---|---|
| SD17 | ̈ | | 16-1/60 | 16+2/60 | | |
| SD19 | ~ | 86 | 86 | | | |
| SD21 | ⌐ | | 8 | 64 | | |
| SD25 | ⌐ | | 8 | 64 | | |
| SD25 | ̆ | | 8-1/60 | 8+2/60 | | |
| SD27 | ° | | 16 | | | |
| SD29 | · | | 16 | | | |
| SD31 | ‖ | | 95 | | | |
| SD41 | ▪ | | 2 | | | |
| SD43 | ↓ | | 31 | | | |
| | ∕ | 48 | 48 | | | |
| | 1/8 | | 60-1/60 | 65-1/60 | | |
| | 5/8 | | 59-1/60 | 65+1/60 | | |
| | 5/8 | | 71 | | | |
| | 7/8 | | 56 | | | |
| | 1/3 | | 60-1/60 | 65-1/60 | 60+1/60 | |
| | 2/3 | | 91-1/60 | 63+1/60 | 91+8/60 | |
| | ↓ | | 60-1/60 | 49-1/60 | 60+1/60 | |
| | ⅔ | | 59-1/60 | 45+1/60 | 59+1/60 | |
| | ∫ | | 20 | 2 | 20 | |
| | % | | 10-1/60 | 50+2/60 | 10+2/60 | |
| | th | | 12-2/60 | 6+1/60 | 42+8/60 | |
| | ß | | 35-2/60 | 10-1/60 | 10-1/60 | |
| | fr | | 89-2/60 | 11-2/60 | | |
| | { | | 3-2/60 | 69-1/60 | 97+8/60 | 95 |
| | } | | 97-2/60 | 95 | 58+8/60 | 3+1/60 |
| | ℓ | 53 | 53 | | | |

## Claims

1. A typing device for typing symbols including alphabetical and non-alphabetical symbols comprising a platen which defines a typing line and a character-bearing member (20) movable parallel along the typing line to a succession of typing points spaced in accordance with a predetermined typing pitch, the said member carrying a plurality of type symbols which can be brought selectively into a printing position with a reference axis (11) of the symbol aligned with one of the printing points (10) and wherein the device is operable to print some symbols by a double printing of two type symbols at the same printing point, characterised in that the type symbols can be printed with the reference axis (11) aligned with a printing point (10) or displaced to the left or right thereof by a selected number of proper fractions of the typing pitch and in that the type symbols include a main group of symbols including upper and lower case letters, numerals and accents for printing with the reference axis aligned with the printing point and a smaller, auxiliary group of non-alphabetic symbols including punctuation marks, diacritical marks and mathematical signs which are printable in various combinations with symbols from the first group and with various displacements to the left or the right or zero displacement so as to synthesize typed symbols in which symbols from the auxiliary group contribute in a variable manner, depending on the displacement thereof.

2. A typing device according to claim 1, characterised in that the type symbols include a group of alphanumeric characters substantially similar to OCR—B characters for optical recognition.

3. A typing device according to claim 1, characterised in that the auxiliary group of type symbols include a comma printable with its reference axis aligned with the printing position and in combination with a consonant to form the cedilla thereof and in combination with an upper dot to form a semi-colon and moreover printable with its reference axis displaced to the left in combination with the letter "u" to form the Greek letter "µ".

4. A typing device according to claim 1, characterised in that the type symbols includes an oblique stroke inclined to the left for defining a capital "X" in combination with an oblique stroke included to the right when both the oblique strokes are printed with the reference axis in alignment with the printing position.

5. A typing device according to claim 1, characterised in that some symbols of the auxiliary group are printable with the reference axis displaced both to the left and to the right of the printing point so as to synthesize a double symbol.

6. A typing device according to claim 5, characterised in that an upper dot is printable with the reference axis displaced both to the left and to the right of the printing point so as to synthesize a diaresis above a character.

7. A typing device according to claim 5, characterised in that an apostrophe symbol is printable with the reference axis displaced both to the left and to the right of the printing point so as to synthesize a quotation mark.

8. A typing device according to claim 5, characterised in that "a less than symbol <" and "a greater than symbol >" are each printable with the reference axis displaced both to the left and to the right of the printing point so as to synthesize "a much less than symbol <<" and "a much greater than symbol >>", respectively.

9. A typing device according to claim 5, characterised in the auxiliary group of symbols includes a lower case "i" without its dot and an upper dot, in that these two symbols are printable with their reference axes in alignment the printing point to synthesize an "i" with its dot and are printable with the reference axis of the dotless "i" in alignment the printing point and with the upper dot with reference axis displaced both to the left and to the right of the printing point so as to synthesize an "i" with a diaresis.

10. A typing device according to claim 5, characterised in that an acute accent is printable with the reference axis displaced both to the left and to the right of the printing point so as to synthesize a double inverted comma.

11. A typing device according to claim 1, characterised in that an acute accent and a grave accent are each printable with the reference axis displaced to the left and to the right of the printing point so as to synthesize a circumflex accent or a shortening symbol (inverted circumflex accent).

12. A typing device according to claim 11, characterised in that the acute accent and a grave accent are each printable with the reference axis aligned with the printing point so as to synthesize the acute or grave accent over a letter, as the case may be.

## Patentansprüche

1. Typenschreibmaschine zum Schreiben von Symbolen, einschließlich alphabetischer und nicht-alphabetischer Symbole, mit einer Schreibwalze, die eine Schreibzeile bestimmt, und einem Zeichen tragenden Glied (20), das parallel längs der Schreibzeile zu einer Folge von Schreibstellen bewegbar ist, die in Übereinstimmung mit einer vorbestimmten Schreibteilung auseinanderliegen, wobei das erwähnte Glied mehrere Typensymbole trägt, die wählbar in eine Druckposition gebracht werden können, wobei eine Bezugsachse (11) des Symbols mit einer der Druckstellen (10) fluchtet, und wobei die Schreibmaschine so betreibbar ist, daß sie einige Symbole durch ein zweifaches Abdrucken von zwei Typensymbolen an der gleichen Druckstelle abdruckt, dadurch gekennzeichnet, daß die Typensymbole bei mit einer Druckstelle (10) fluchtender Bezugsachse (11) oder demgegenüber um eine vorgewählte Anzahl geeigneter Bruchteile der Schreibteilung nach rechts oder links verschoben abdruckbar sind und daß die Typensymbole aufweisen: eine Hauptgruppe von Symbolen, einschließlich Buchstaben in Groß-und Kleinschreibweise, Ziffern und Akzente, die bei mit der Druckstelle fluchtender Bezugsachse abgedruckt werden, und eine kleinere Hilfsgruppe aus nicht-alphabetischen Symbolen, einschließlich Satzzeichen, diakritischen Zeichen und mathematischen Zeichen, die in verschiedenen Kombinationen mit Symbolen aus der ersten Gruppe und verschiedenen Verschiebungen nach links oder rechts oder einer Null-Verschiebung abdruckbar sind, um abgedruckte Symbole zusammenzusetzen, zu denen Symbole aus der Hilfsgruppe in veränderbarer Weise, in Abhängigkeit von ihrer Verschiebung, beitragen.

2. Typenschreibmaschine nach Anspruch 1, dadurch gekennzeichnet, daß die Typensymbole eine Gruppe alphanumerischer Zeichen aufweisen, die im wesentlichen den OCR-B-Zeichen für eine optische Erkennung gleichen.

3. Typenschreibmaschine nach Anspruch 1, dadurch gekennzeichnet, daß die Hilfsgruppe aus Typensymbolen ein Komma aufweist, das unter Fluchtung seiner Bezugsachse mit der Druckstelle und in Kombination mit einem Konsonanten, um dessen Cedille zu bilden, und in Kombination mit einem hochgestellten Punkt zur Bildung eines Semikolons und darüber hinaus bei nach links verschobener Bezugsachse in Kombination mit dem Buchstaben "u" zur Bildung des griechischen Buchstaben "μ" abdruckbar ist.

4. Typenschreibmaschine nach Anspruch 1, dadurch gekennzeichnet, daß die Symbole einen nach links geneigten Schrägstrich zur Bildung des Großbuchstaben "X" in Kombination mit einem nach rechts geneigten Schrägstrich, wenn beide Schrägstriche bei mit der Druckstelle fluchtender Bezugsachse gedruckt werden, aufweisen.

5. Typenschreibmaschine nach Anspruch 1, dadurch gekennzeichnet, daß einige Symbole der Hilfsgruppe sowohl mit nach links als auch mit nach rechts gegenüber der Druckstelle verschobener Bezugsachse abdruckbar sind, um ein Doppelsymbol zusammenzusetzen.

6. Typenschreibmaschine nach Anspruch 5, dadurch gekennzeichnet, daß ein hochgestellter Punkt mit sowohl nach links als auch nach rechts gegenüber der Druckstelle verschobener Bezugsachse abdruckbar ist, um eine Diaresis über einem Zeichen zusammenzusetzen.

7. Typenschreibmaschine nach Anspruch 5, dadurch gekennzeichnet, daß ein Apostroph-Symbol mit sowohl nach links als auch nach rechts gegenüber der Druckstelle verschobener Bezugsachse abdruckbar ist, um ein Anführungszeichen zusammenzusetzen.

8. Typenschreibmaschine nach Anspruch 5, dadurch gekennzeichnet, daß ein "Kleiner-als-Zeichen <" und ein "Größer-als-Zeichen >" jeweils mit sowohl nach links als auch nach rechts gegenüber der Druckstelle verschobener Bezugsachse abdruckbar sind, um jeweils ein "Sehr-viel-kleiner-als-Zeichen ≪" und ein "Sehr-viel-größer-als-Eichen ≫" zusammenzusetzen.

9. Typenschreibmaschine nach Anspruch 5, dadurch gekennzeichnet, daß die Hilfsgruppe aus Symbolen ein "i" in Kleinschreibweise ohne seinen Punkt und einen hochgestellten Punkt aufweist, so daß diese beiden Symbole bei mit der Druckstelle fluchtenden Bezugsachsen des punktlosen "i" und bei sowohl nach links als auch nach rechts genenüber der Druckstelle verschobener Bezugsachse des hochgestellten Punktes abdruckbar sind, um ein "i" mit einer Diaresis zusammenzusetzen.

10. Typenschreibmaschine nach Anspruch 5, dadurch gekennzeichnet, daß ein Akut mit gegenüber der Druckstelle sowohl nach links als auch nach rechts verschobener Bezugsachse abdruckbar ist, um ein doppeltes umgekehrtes Komma zusammenzusetzen.

11. Typenschreibmaschine nach Anspruch 1, dadurch gekennzeichnet, daß ein Akut und ein Gravis jeweils mit nach links und nach rechts gegenüber der Druckstelle verschobener Bezugsachse abdruckbar sind, um einen Zirkumflex oder ein Abkürzungssymbol (einen umgekehrten Zirkumflex) zusammenzusetzen.

12. Typenschreibmaschine nach Anspurch 11, dadurch gekennzeichnet, daß der Akut und der Gravis jeweils bei mit der Druckstelle fluchtender Bezugsachse abdruckbar sind, um das Akut- oder Gravis-Akzentzeichen über einem Buchstaben fallweise zusammenzusetzen.

## Revendications

1. Dispositif de dactylographie destiné à frapper des symboles comprenant des symboles alphabétiques et non alphabétiques, comprenant une platine qui définit une ligne de frappe et un élément porte-caractères (20) qui peut se déplacer parallèlement le long de la ligne de frappe pour se placer dans une succession de points de frappe espacés selon un pas de frappe prédéterminé, ledit élément portant une pluralité de symboles de types qui peuvent être mis sélectivement dans une position d'impression par rapport à un axe de référence (11) du symbole aligné sur l'un des points d'impression (10), et dans lequel le dispositif peut être mis en action pour imprimer certains symboles par une double impression de deux symboles de types au même point d'impression, caractérisé en ce que les symboles de types peuvent être imprimés avec l'axe de référence (11) aligné sur un point d'impression (10) ou décalé vers la gauche ou vers la droite de ce point d'impression d'un nombre choisi de fraction propre du pas de frappe, et en ce que les symboles de types comprennent un groupe principal de symboles comprenant les lettres capitales et de bas de casse, des chiffres et accents destinés à être imprimés avec l'axe de référence aligné sur le point d'impression et un groupe auxiliaire, plus petit, de symboles non alphabétiques, comprenant des signes de ponctuation, des signes diacritiques, des signes mathématiques qui peuvent être imprimés dans différentes combinaisons avec des symboles pris dans le premier groupe et avec différents décalages vers la gauche ou vers la droite ou avec un décalage nul pour synthétiser des symboles frappés dans lesquels des symboles du groupe auxiliaire entrent en composition d'une façon variable, selon leur décalage.

2. Dispositif de dactylographie selon la revendication 1, caractérisé en ce que les symboles de types comprennent un groupe de caractères alphanumériques sensiblement analogues aux caractères OCR-B pour la reconnaissance optique.

3. Dispositif de dactylographie selon la revendication 1, caractérisé en ce que le groupe auxiliaire de symboles de types comprend une virgule pouvant être imprimée avec son axe de référence aligné sur la position d'impression et en combinaison avec une consonne pour former la cédille de cette consonne et en combinaison avec un point supérieur pour former un point virgule et pouvant être imprimée en outre, avec son axe de référence décalé vers la gauche en combinaison avec la lettre "u" pour former la lettre grecque "μ".

4. Dispositif de dactylographie selon la revendication 1, caractérisé en ce que les symboles de types comprennent une barre oblique inclinée vers la gauche pour définir la capitale "X" en combinaison avec une barre oblique inclinée vers la droite lorsque les barres obliques sont imprimées avec l'axe de référence dans l'alignement de la position d'impression.

5. Dispositif de dactylographie selon la revendication 1; caractérisé en ce que certains symboles du groupe auxiliaire peuvent être imprimés avec l'axe de référence décalé vers la gauche aussi bien que vers la droite du point d'impression, de manière à synthétiser un symbole double.

6. Dispositif de dactylographie selon la revendication 5, caractérisé en ce qu'un point supérieur peut être imprimé avec son axe de référence décalé aussi bien vers la gauche que vers la droite du point d'impression de manière à synthétiser un tréma au-dessus d'un caractère.

7. Dispositif de dactylographie selon la revendication 5, caractérise en ce qu'un symbole apostrophe peut être imprimé avec son axe de référence décalé aussi bien vers la gauche que vers la droite du point d'impression pour synthétiser un guillemet.

8. Dispositif de dactylographie selon la revendication 5, caractérisé en ce qu'un symbole "plus petit que <" et un symbole "plus grand que >" peuvent être imprimés chacun avec l'axe de référence décalé aussi bien vers la gauche que vers la droite du point d'impression, pour synthétiser un symbole "beaucoup plus petit que «" et un symbole "beaucoup plus grand que »" respectivement.

9. Dispositif de dactylographie selon la revendication 5, caractérisé en ce que le groupe auxiliaire de symboles comprend un "i" minuscule sans son point et un point supérieur, en ce que ces deux symboles peuvent être imprimés avec leurs axes de référence dans l'alignement du point d'impression pour synthétiser un "i" avec son point et peuvent être imprimés avec l'axe de référence du "i" sans point dans l'alignement du point d'impression et avec le point supérieur ayant son axe de référence décalé aussi bien vers la gauche que vers la droite du point d'impression pour synthétiser un "i" avec un tréma.

10. Dispositif de dactylographie selon la revendication 5, caractérisé en ce qu'un accent aigu peut être imprimé avec l'axe de référence décalé aussi bien vers la gauche que vers la droite par rapport au point d'impression pour synthétiser une virgule double inversée (guillemets).

11. Dispositif de dactylographie selon la revendication 1, caractérisé en ce qu'un accent aigu et un accent grave peuvent être imprimés chacun avec son axe de référence décalé vers la gauche aussi bien que vers la droite par rapport au point d'impression pour synthétiser un accent circonflexe ou un symbole de son bref (accent circonflexe inversé).

12. Dispositif de dactylographie selon la revendication 11, caractérisé en ce que l'accent aigu et un accent grave peuvent être imprimés avec l'axe de référence alginé sur le point d'impression pour synthétiser l'accent aigu ou l'accent grave au-dessus d'une lettre, selon le cas.

0 063 938

FIG.1

FIG.2

FIG.6

1

# ABCDEFGH

# abcde gh

# IJKLMNOP

# k mnop

FIG.3

Q R S T U V W

q r s t u v w x

Y Z 2 3 4 5 6

y z 7 8 9 æ ß

& ? § ¤ FIG.4

FIG.5